# EUROPÄISCHE PATENTSCHRIFT

(11) **EP 4 303 395 B1**
(45) Veröffentlichungstag und Bekanntmachung des Hinweises auf die Patenterteilung: **30.07.2025**
(21) Anmeldenummer: 23178719.3
(22) Anmeldetag: 12.06.2023
(51) Int. Cl.: E06B 9/72, E06B 9/84, A62C 2/10, G01D 5/14, E06B 9/68, E06B 9/80, A62C 2/24

(54) **ROHRANTRIEB FÜR EINE BRANDSCHUTZANLAGE**
TUBE DRIVE FOR A FIRE PROTECTION SYSTEM
ENTRAÎNEMENT DE TUYAU POUR UNE INSTALLATION DE PROTECTION CONTRE L'INCENDIE

(30) Priorität: 07.07.2022 DE 102022116971
(43) Veröffentlichungstag der Anmeldung: 10.01.2024
(73) Patentinhaber: Becker-Antriebe GmbH, 35764 Sinn (DE)
(72) Erfinder: FREYER, Fabian, 35745 Herborn (DE); KLEIN, Manuel, 35745 Herborn (DE); WAGNER, Daniel, 35633 Lahnau (DE); THIELMANN, Sebastian, 35745 Herborn (DE)
(74) Vertreter: Weckenbrock, Matthias

(56) Entgegenhaltungen:
- EP-A1- 3 255 386
- DE-A1- 102008 034 321
- DE-A1- 102019 107 324

## Beschreibung

Die Erfindung betrifft einen Rohrantrieb für einen auf einer Wickelwelle aufwickelbaren Behang nach dem Oberbegriff des Anspruchs 1.

Die Erfindung betrifft ferner eine Brandschutzanlage mit einem Rohrantrieb nach Anspruch 20 und die Verwendung einer Positionserfassungseinrichtung in einem Rohrantrieb nach Anspruch 22.

Der Behang ist in Form eines Rauchschutzvorhangs, Feuerschutzbehanges, Feuer- oder Rauchschutzabschlusses, einer Rauchschürze oder dergleichen ausgebildet.

Rohrantriebe, auch kurz Antrieb genannt, können bei Rauchschutzvorrichtungen eingesetzt werden, die insbesondere in einer Normalstellung geöffnet sind und die im Gefahren- oder Brandfalle herabgelassen werden, wobei der Brandschutzbehang im geöffneten Zustand auf einer Wickelwelle aufgewickelt ist.

Grundsätzlich müssen derartige Vorrichtungen, beispielsweise Rauch- und Brandschutzabschlüsse, selbstschließend sein. Das heißt, dass sie ohne Fremdenergie die Schließstellung, auch Funktionsstellung genannt, erreichen. In einer Grund- bzw. Normalstellung befindet sich der Behang in der Regel in einer geöffneten, meist oberen, Position.

In der Grund- bzw. Normalstellung ist die Arbeitsstrombremse aktiv, also mit einer Bremsspannung versorgt und stellt damit den Behang in der Ruhestellung fest. Es handelt sich in diesem Fall um eine sogenannte Feststellvorrichtung.

An derartige Brandschutzanlagen werden besondere Anforderungen gestellt, insbesondere in einem Gefahrenfall oder für den Katastrophenfall.

Im Katastrophenfall steht keine elektrische Versorgungsspannung mehr zur Verfügung, weder am Antrieb selbst, noch an einer Steuer- und Regeleinheit für den Antrieb. Dies wird ausgelöst durch einen Stromausfall, einen Defekt der Netzversorgung oder einen Defekt der elektrischen Leitungen.

Der Behang, beispielsweise Rauch- und/oder Brandschutzabschluss rollt selbsttätig ab, da die Arbeitsstrombremse den Behang freigibt, sobald keine Spannung mehr an dieser anliegt. Der Katastrophenfall endet durch Instandsetzung etwaiger Schäden und/oder Wiederkehr der Netzversorgung.

In einem Gefahrenfall, auch Alarmzustand genannt, wird durch eine übergeordnete Steuerung (Brandmeldezentrale) oder einen Rauchmelder, Wärmesensoren o.Ä. aufgrund eines Alarms, einer detektierten Brandentstehung oder auch während einer Wartung/monatlichen Regelüberprüfung, ausschließlich die Bremsspannung unterbrochen und die Arbeitsstrombremse damit deaktiviert. Die Feststellvorrichtung wird damit unwirksam und die Anlage verlässt aufgrund ihres Eigengewichts selbsttätig die Normalstellung. Die elektrische Netzversorgung ist im Gefahrenfall weiter intakt. Der Gefahrenfall endet durch Quittieren des Alarms und Wiederkehr der Bremsspannung.

Wie erwähnt, ist es bei solchen Rauchschutz- oder Brandvorhängen oder dgl. erforderlich, dass im Gefahrenfalle der Behang auch ohne wirksamen Antrieb selbsttätig in die Schließstellung überführt bzw. abgerollt wird. Der elektromotorische Antrieb besteht in der Regel aus einem Motor, der mit einer elektromagnetischen Arbeitsstrombremse mechanisch gekoppelt ist. Sobald der Gefahrenfall durch Rauchsensoren, Wärmesensoren oder dgl. eintritt, wird die elektromagnetische Arbeitsstrombremse deaktiviert, d. h. gelöst.

Umgekehrt ist die Arbeitsstrombremse in der Normalstellung aktiviert und damit wirksam. In der oberen Endstellung des Behangs wird die Arbeitsstrombremse mit 24 V beaufschlagt und hält damit den Vorhang in der gewünschten Endlage. Im Gefahrenfall, also ohne Spannung an der Arbeitsstrombremse, wirkt die Arbeitsstrombremse nicht mehr und der Vorhang fällt durch sein Eigengewicht nach unten.

Im Katastrophenfall, d.h. wenn der Netzstrom ausgefallen ist, kann auch ein Akkumulator die Bremsspannung aufrecht halten, so dass nicht bei jedem Stromausfall der Vorhang abfällt. Wenn also die komplette Stromversorgung abgetrennt ist und falls auch die Akkuversorgung nicht mehr gewährleistet ist und/oder die Leitungsverbindung zwischen Antrieb und Steuerung unterbrochen ist, würde der Vorhang schnell ablaufen, weil keine Steuerungsfunktion mehr vorhanden ist. Exakt für diesen Fall kann ein Schließgeschwindigkeitsregler, beispielsweise eine Fliehkraftbremse, zum Abbremsen des Behangs während des Abrollens vorgesehen sein, welche als Zusatzbremseinrichtung dient und im eigentlichen Sinn keine Haltefunktion ermöglichen soll.

Immer wenn die Arbeitsstrombremse deaktiviert ist, besteht die Gefahr, dass ein unkontrolliertes Herunterfahren des Vorhanges in die Schließstellung auftritt, wodurch der Behang aufgrund der auftretenden Beschleunigung bzw. Momente beschädigt werden kann. Zudem besteht auch die Gefahr der Verletzung der im Gefahrenfall den Behang passierenden bzw. unter dem Behang hindurcheilenden Personen.

Zur Vermeidung dieser Probleme schlägt die DE 10 2008 034 321 A1 einen Brandschutzantrieb der eingangs genannten Art vor, mit einem

Antriebsmotor zum Aufrollen eines Behangs, mit einer Arbeitsstrombremse zum Abbremsen des Behangs und mit einem mit der Arbeitsstrombremse verbundenen Bremsmotor. Die vom Bremsmotor erzeugte Spannung wird beim Abrollen des Behangs zur Aktivierung der Arbeitsstrombremse verwendet. Der Bremsmotor weist dabei eine der Betriebsspannung der Arbeitsstrombremse entsprechende Ausgangsspannung auf. Im Gefahren-/Katastrophenfall steht die Bremsspannung nicht zur Verfügung, d.h. die Arbeitsstrombremse ist spannungslos und somit deaktiviert. Infolge dessen wickelt sich der Rauchschutzvorhang schwerkraftbedingt ab, wodurch über die Antriebswelle, das Getriebe, insbesondere ein Planetengetriebe und die Antriebswelle des Gleichstrommotors gedreht wird. Der Bremsmotor wird in diesem Falle generatorisch betrieben und erzeugt die Betriebsspannung der Arbeitsstrombremse. Der Rauchschutzvorhang wird somit in einem Gefahrenfalle bis zur Schließstellung gebremst heruntergelassen.

Die EP 3 067 510 A1 betrifft einen Antrieb für einen Behang in Form eines Rauchschutzvorhanges, Rollladens, Rolltores, Garagentores, Feuerschutzbehanges, Raumteilers oder dergleichen mit einer Notversorgung für eine elektronische Endabschaltung. Bei diesem Antrieb kann das Modul zur Positionsdatenerfassung über einen Pufferkondensator mit Energie versorgt werden. Nachteilig sind die zusätzlichen Kosten für den Pufferkondensator mit einer speziellen elektronischen Schaltung zur Ladung des Kondensators und die zeitliche Begrenzung der Energieversorgung.

Die DE 19 610 876 C2 betrifft eine Bremsvorrichtung für einen Rauchschutzvorhang, Rolläden, Rolltore, Garagentore, Feuerschutzbehang o. dgl. Behang, wobei der Behang mit einer elektromotorisch angetriebenen Wickelwelle aufrollbar bzw. abrollbar ist. Ferner weist die Vorrichtung eine mittels Reibkraft wirkende Bremse auf, welche bei einer oberhalb der Nenndrehzahl liegenden Drehzahl der Wickelwelle anspricht und ein kontrolliertes Absenken des Behangs gewährleistet. Diese Vorrichtung sieht keine Endabschaltung vor.

Die DE 10 2019 107 324 A1 betrifft eine Positionserfassungsanordnung für durch eine Antriebsvorrichtung verfahrbare Türen oder Tore mit einer Gehäuseanordnung, in dem eine Schaltwelle vorgesehen ist, die mit einer Antriebswelle der Antriebsvorrichtung wirkverbunden ist, wobei eine Sensoranordnung zur Positionserfassung der Schaltwelle und eine Steuereinheit vorgesehen sind, wobei die Sensoranordnung elektronisch mit der Steuereinheit verbunden ist, die wiederum mit der Antriebsvorrichtung wirkverbunden ist.

Die EP 3 255 386 A1 betrifft einen Absolutwertgeber eines Rohrmotors. Nachteilig gemäß dieser Lehre sei eine schlechte Nutzungsleistung der bekannten Rohrmotoren, die dadurch verursacht werden würde, dass die spezifische Position einer Rollladentür oder eines Rollladenfensters nicht beim Betrieb des Rohrmotors durch Messen des Betriebszustands des Rohrmotors erfasst werden könne. Gemäß dem durch die EP 3 255 386 A1 bereitgestellten Absolutwertgeber eines Rohrmotors treibt eine Eingangswelle über eine Geschwindigkeitsveränderungsvorrichtung eine Antriebswelle an, um diese zu drehen; auf der Antriebswelle ist eine Codescheibe angeordnet; auf der Codescheibe ist ein Tastteil angeordnet. Ferner ist ein Sensor zum Sammeln von Daten bei Bewegung der Antriebswelle vorgesehen.

Bei bekannten Rohrantrieben (d.h. nicht-Brandschutzantriebe) für beispielsweise Rollläden oder Tore kann die Verdrehung der Motorwelle überwacht werden. Im Gegensatz zu den hier beschriebenen Brandschutzvorrichtungen wird bei den bekannten nicht-Brandschutzantrieben eine Ruhestrombremse eingesetzt. Das heißt eine Verdrehung der Motorwelle findet nur bei aktiver Spannungsversorgung und im motorischen Betrieb statt. Bei Brandschutzanlagen muss aufgrund der selbsttätig schließenden Eigenschaft eine Arbeitsstrombremse eingesetzt werden.

Im Gefahren-/Katastrophenfall wird das Herablassen des Behangs bei derartigen Vorrichtungen mit dem Unterbrechen der Bremsspannung ausgelöst, d.h. die Arbeitsstrombremse ist stromlos/deaktiviert. In diesem Gefahren-/Katastrophenfall ist es daher nicht möglich, die Position des Behangs sicher abzufragen. Außerdem ist die Position des Behangs bei bekannten Brandschutzanlagen nach einem Katastrophenfall nicht mehr sicher bekannt.

Zwar ist es ist bei den Vorrichtungen aus dem Stand der Technik möglich, mit Hilfe einer elektronischen Endabschaltung zu erkennen, dass eine Spannungsunterbrechung vorgelegen hat. Wenn das erkannt wurde, muss der Antrieb aber eine Referenzfahrt gegen einen mechanischen Anschlag ausführen. Erst danach verfügt er wieder über genaue Positionsdaten. Die Bestimmung von Positionen im Stillstand des Antriebs ist beim Stand der Technik dagegen nicht möglich.

Aus dem Stand der Technik bekannte Absolutwertgeber zur Positionserfassung an Toren sind von ihren Abmessungen vergleichsweise groß und werden daher z.B. direkt an der Wickelwelle der Toranlage oder am Achsantrieb extern angebracht. Eine Kombination von einem solchen Absolutwertgeber mit einem Rohrantrieb ist aus dem Stand der Technik nicht bekannt. Weiterhin würde dadurch zusätzlicher Verdrahtungs- und Wartungsaufwand entstehen.

Ausgehend von den zuvor beschriebenen Nachteilen liegt der Erfindung die Aufgabe zugrunde, einen Rohrantrieb für Brandschutzanlagen zur Verfügung zu stellen, welcher es ermöglicht, die absolute Position des Behangs in einem Gefahrenfalle oder zum Zeitpunkt des Wegfalls der Betriebsspannung und danach zu erkennen und zu überwachen, insbesondere ohne eine zusätzliche Referenzfahrt des Behangs vornehmen zu müssen.

Diese Aufgabe wird gelöst mit einem Rohrantrieb für Brandschutzanlagen für einen auf einer Wickelwelle aufwickelbaren Behang nach Anspruch 1. Die Aufgabe wird auch gelöst durch eine Brandschutzanlage mit einem Rohrantrieb nach Anspruch 20 und durch die Verwendung einer Positionserfassungseinrichtung in einem Rohrantrieb nach Anspruch 22.

Die Erfindung betrifft einen Rohrantrieb für einen auf einer Wickelwelle aufwickelbaren Behang in Form eines Rauchschutzvorhangs, Feuerschutzbehanges, Feuer- oder Rauchschutzabschlusses, einer Rauchschürze oder dergleichen, mit einem Antriebsmotor zum Verfahren des Behangs zwischen einer Öffnungs- und einer Schließstellung, mit einer Arbeitsstrombremse zum Halten des Behangs in einer vorgegebenen Position und mit einem Schließgeschwindigkeitsregler zum Abbremsen des Behangs während des Abrollens.

Die vorgegebene Position kann eine Ruhe- oder Grundstellung, insbesondere eine obere Position des Behangs sein. In der Ruhe- oder Grundstellung wird der Behang mittels Bremse in der oberen Position gehalten. Unter einer Funktionsstellung im Sinne der Rauchschutzanlage ist der geschlossene Zustand zu verstehen, d.h. der Behang ist abgewickelt.

Erfindungsgemäß weißt der Rohrantrieb eine elektronische Positionserfassungseinrichtung zur Erkennung bzw. Überwachung der absoluten Position des Behangs und zur Bestimmung der Drehzahl der Wickelwelle auch in einem Gefahrenfall, in dem -zumindest- die Arbeitsstrombremse und der Antriebsmotor in einem spannungslosen Zustand sind, und unmittelbar nach einem Katastrophenfall, in dem der Antrieb und ggf. eine Steuer- und Regeleinheit in einem spannungslosen Zustand ist bzw. sind, aufweist. Unter "unmittelbar nach einem Katastrophenfall" ist der Zeitpunkt unmittelbar nach Wiederherstellung der Netzspannung zu verstehen.

Wie erwähnt, sind mittels der Vorrichtungen aus dem Stand der Technik keine absoluten Positionsdaten des Behangs an jeder möglichen Position, insbesondere nach einem Gefahren-/Katastrophenfall, detektierbar. Denn im Stand der Technik werden lediglich die Endlagen mittels eines mechanischen Endschalters detektiert.

Dagegen wird im vorliegenden Rohrantrieb für Rauch und Brandschutzbehänge mit Arbeitsstrombremse und Schließgeschwindigkeitsregler, beispielsweise Fliehkraftbremse, jede Position des Behangs mittels der Positionserfassungseinrichtung mit beispielsweise einem Absolutwertgeber und elektronischer Endabschaltung ermittelt.

Aus dem Stand der Technik ist bekannt, dass durch einen Energiespeicher, der in einem Notfall die elektronische Endabschaltung mit Spannung versorgt, die Position des Behangs im Gefahrenfall (zum Zeitpunkt des Stromausfalls) bestimmt werden kann, also gespeichert bleibt und bei Wiederherstellung der Betriebsspannung von der Steuerung des Antriebes abgerufen werden kann, um den Behang, der ja bei Ausfall der Betriebsspannung bewegt wurde, wieder an die ursprüngliche Position vor dem Stromausfall zu verfahren.

Beispielsweise kann im Stand der Technik beim Abrollen des Behangs während des Gefahrenfalls die Anzahl an Umdrehungen der Wickelwelle von der ursprünglichen Position bzw. der Endlage zum Zeitpunkt des Wegfalls der Betriebsspannung bis zur Schließstellung durch die vom Energiespeicher bestromten elektronischen Endabschaltung gezählt und daraus die ursprüngliche Position des Behangs bestimmt und abgespeichert werden.

Dagegen wird bei der Erfindung kein derartiger Energiespeicher benötigt. Denn die Position des Behangs wird mittels der Positionserfassungseinrichtung erfasst. Es werden nicht, wie im Stand der Technik, die Impulse und damit eine Wegstrecke relativ als Differenz, gezählt.

Für langanhaltende Spannungsunterbrechungen sind die Vorrichtungen gemäß Stand der Technik nicht geeignet, da mit dem Energiespeicher nur eine endliche vorbestimmte Zeit überbrückt werden kann.

Außerhalb der Rauch- und Brandschutzantriebe ist die Technik, bei welcher die relativen Impulse gezählt werden, absolut ausreichend da bei Spannungsunterbrechung die Bremse geschlossen ist und die Position sich nicht verändert. Bei diesen Antrieben wird eine Ruhestrombremse eingesetzt, d.h. dass bei Spannungsunterbrechung die Bremse aktiv ist und zum Fahren die Bremse durch Spannungsversorgung deaktiviert wird. Bei Rauch- und Brandschutz ist das eben nicht der Fall und daher ist die erfindungsgemäße Positionserfassungseinrichtung, bspw. der Absolutwertdrehgeber, eine Lösung dieses Problems.

Im Gefahrenfall ist die Steuer- und Regeleinheit weiterhin in der Lage - mit Hilfe der Positionserfassungseinrichtung - die Position des Antriebs zu detektieren und die Arbeitsstrombremse bei Erreichen einer Zwischenposition wieder einzuschalten und damit den Behang, beispielsweise Rauch- und/oder Brandschutzabschluss in dieser Position zu stoppen.

Denn insbesondere bei Brandschutzanlagen soll im Gefahrenfall flüchtenden Personen ein Fluchtweg freigehalten werden. Hierzu muss der Behang in einer Position, die auch zwischen den Endlagen liegen kann, gestoppt werden. Die Position muss hinreichend genau angefahren werden können, um dadurch auch ein gewisses Maß an Rauchschutz zu gewährleisten.

Im Gefahren-/Katastrophenfall wird der Behang, beispielswiese lediglich schwerkraftbedingt und/oder abgebremst durch den Schließgeschwindigkeitsregler (bspw. Fliehkraftbremse), in die Schließstellung verfahren. Nach einem Gefahren-/Katastrophenfall, d.h. bei Wiederherstellung der Betriebsspannung, ist es erforderlich, dass der Behang wieder in die Ruheposition, d.h. in die obere Endlage überführt wird.

Bei Spannungswiederkehr ist die Steuer- und Regeleinheit ohne vorherige Bewegung der Motorwelle in der Lage die absolute Position des Rohrantriebs - mit Hilfe der Positionserfassungseinrichtung - abzufragen.

Besonders vorteilhaft bei der Erfindung ist, dass jegliche Position des Behangs genau abgefragt werden kann. Bei den Vorrichtungen aus dem Stand der Technik war aufgrund von mechanischen Endschaltern bisher lediglich bekannt, ob der Behang die Endlagen erreicht hat, also oben ist oder nicht. Weiterhin vorteilhaft ist, dass beispielsweise in einer Brandmeldezentrale die Position des Behangs genau angezeigt werden kann und nicht nur, ob der Behang bspw. oben ist oder nicht.

Darüber hinaus können auch Fehlfunktionen der Vorrichtungen, wie z.B. "auf ein Hindernis auffahren" detektiert und weitergeleitet werden.

Aus der erfindungsgemäßen Vorrichtung ergeben sich weitere Vorteile. Beispielsweise unterliegen Rauch- und Brandschutzabschlüsse in der Regel einer monatlichen Überprüfung. Dabei wird häufig eine Sicht- und Funktionskontrolle des Antriebs bzw. des Behangs durchgeführt. Mit Hilfe der elektronischen Positionserfassungseinrichtung, insbesondere einem Absolutwertdrehgeber, und der dazu passenden Steuer- und Regeleinheit kann die korrekte Funktion des Schließgeschwindigkeitsreglers, bspw. der Fliehkraftbremse, automatisch überwacht werden.

Gemäß der harmonisierten europäischen Norm hEN 16034 darf die Ablaufgeschwindigkeit solcher Anlagen im Mittel nicht größer als 0,15 m/s sein (nach EN12101-1 min. 0,06 m/s und max. 0,30 m/s). Die dafür notwendige Drehzahlbegrenzung wird durch den im Rohrantrieb integrierten Schließgeschwindigkeitsregler (z.B. Fliehkraftbremse) sichergestellt.

In einem Gefahrenfall kann der Behang an einer Zwischenposition gestoppt werden um beispielsweise für eine gewisse Dauer noch einen Fluchtweg freizuhalten. Erst nach Ablauf einer bestimmten Zeit kann ein vollständiges Schließen ermöglicht werden. Ohne die genaue Position zu kennen ist ein Stoppen zwischen den Endlagen nicht zielführend und insbesondere zu ungenau, da nach heutigem Stand der Technik die Zwischenposition zeitgesteuert angefahren wird und in der Regel die Drehgeschwindigkeit nicht konstant ist. Das Erreichen einer bestimmten Position kann in einem sogenannten Monitoring aktiv gemeldet werden.

Gemäß einer ersten vorteilhaften Ausgestaltung der Erfindung ist der Schließgeschwindigkeitsregler eine Fliehkraftbremse oder eine elektromotorische Bremse mit einem Bremskondensator oder eine Stotterbremse.

Es ist vorteilhaft, dass mittels des Schließgeschwindigkeitsreglers die Ablaufdrehzahl der Wickelwelle, insbesondere die Ablaufgeschwindigkeit des Behangs überwach- und/oder regelbar ist.

Es ist denkbar, dass der Schließgeschwindigkeitsregler als Stotterbremse ausgebildet ist, und dass zum Einstellen der Abrollgeschwindigkeit des Behangs der Grenzwert, ab dem die Arbeitsstrombremse betätigt wird, einstellbar ist.

Ebenfalls ist es denkbar, dass der Schließgeschwindigkeitsregler als elektromotorische Bremse ausgebildet ist, und dass zum Einstellen der Abrollgeschwindigkeit des Behangs (2) der Bremswiderstand einstellbar ist oder bei einem getakteten Ein- und Ausschalten der Bremse die Taktfrequenz einstellbar ist.

In einer Weiterbildung der Erfindung ist vorgesehen, dass die Positionserfassungseinrichtung mit einer Steuer- und Regeleinheit des Rohrantriebs verbunden ist, mittels welcher der Antriebsmotor und/oder die Arbeitsstrombremse und/oder der Schließgeschwindigkeitsregler in Abhängigkeit von einem durch die Positionserfassungseinrichtung ausgegebenen Signal steuer- und/oder regelbar ist bzw. sind.

Die Positionserfassungseinrichtung gibt ein Signal aus, welches durch die Steuereinrichtung ausgelesen und ausgewertet wird. Auf diese Weise ist ein Monitoring, d.h. eine permanente Überwachung der Position des Behangs möglich. Nach einem Gefahren-/Katastrophenfall, d.h. nach Wegfall der Betriebsspannung, kann bei Spannungswiederkehr der Status des Antriebs unmittelbar ausgelesen werden.

Besonders vorteilhaft ist eine Ausgestaltung der Erfindung, bei der die Positionserfassungseinrichtung als Absolutwertgeber, insbesondere als Absolutwertdrehgeber ausgebildet ist. Im Vergleich zum Stand der Technik mit einer dortigen Auswertung über einen Hallsensor mit Polrad werden gemäß der Erfindung keine relativen Werte ausgegeben (Impulse), sondern absolute Positionsdaten (eindeutige Zuordnung).

Aufgrund des Absolutwertdrehgebers ist jeder Behangposition genau eine Stellung von zwei Sensorzahnräder zueinander zugeordnet. Es werden nicht wie im Stand der Technik die Impulse und damit eine Wegstrecke relativ als Differenz, gezählt. Die Position ist vom Sensor direkt abrufbar.

Gemäß einer weiteren Variante der Erfindung ist wenigstens eine Endposition bzw. Endlage für den Behang elektronisch in der Steuer- und Regeleinheit abgespeichert.

Bisher wurden die Endlagen im Stand der Technik mechanisch mittels Ritzeln definiert, welche bei Erreichen einer Endlage den Kontakt eines Mikroschalters betätigt haben. Eine Einstellung der Endlagen beim Stand der Technik ist sehr aufwendig, da ein Installateur bzw. Monteur über Einstellschrauben am Rohrantrieb die Position der Ritzel mit einem Werkzeug verstellen muss. Bei Brandschutzbehängen kann der Rohrantrieb in mehreren Metern Höhen montiert sein. Gemäß der Erfindung können vorliegend Positionen vorteilhafterweise elektronisch definiert werden, beispielsweise über einen Fernzugriff. Dadurch wird die Installation deutlich einfacher.

Eine weitere Ausgestaltung der Erfindung sieht vor, dass eine elektronische Endabschaltung mittels der mit der Positionserfassungseinrichtung verbundenen Steuer- und Regeleinheit ansteuerbar ist.

Die elektronische Endabschaltung kann Bestandteil der Steuer- und Regeleinheit sein, welche wiederum mit der Positionserfassungseinrichtung verbunden sein kann.

Vorteilhafterweise kann die Steuer- und Regeleinheit für eine Überwachung des Schließgeschwindigkeitsreglers und/oder der Arbeitsstrombremse ausgebildet sein.

Die Steuer- und Regeleinheit überprüft selbstständig die Einhaltung der normativ geforderten Ablaufgeschwindigkeit und meldet evtl. Abweichungen, z.B. auf Grund von Verschleiß. Dafür muss einmalig eine Kalibrierfahrt durchgeführt werden, dies kann auch automatisch erfolgen. Die Geschwindigkeit wird mit Hilfe der Positionserfassungseinrichtung, bspw. einem Absolutwertdrehgeber und der dazugehörigen Steuer- und Regeleinheit ermittelt. Zur Überwachung der Arbeitsstrombremse kann der Nachlaufweg überwacht werden. So wird frühzeitig ein beginnender Defekt/Verschleiß dieser erkannt.

Gemäß einer Weiterbildung der Erfindung weist die Steuer- und Regeleinheit und/oder die Positionserfassungseinrichtung eine Analyseelektronik zur Bestimmung von Daten, insbesondere Positionsdaten und/oder Abschaltdaten des Behangs und/oder der Wickelwelle, und einen Datenspeicher zur Abspeicherung dieser Daten auf.

Insbesondere kann in der Steuer- und Regeleinheit die Analyseelektronik integriert sein, welche die Positionsdaten der Positionserfassungseinrichtung aufnimmt und in Bezug zur Zeit setzt, um daraus die Schließgeschwindigkeit zu bestimmen.

In einer Kalibrierfahrt können diese Daten gespeichert werden. Relativ dazu werden Grenzwerte festgelegt (z.B. +-10%) bzw. voreingestellt, die bei jeder folgenden Fahrt überwacht werden können. Die Überwachung des Schließgeschwindigkeitsreglers und/oder der Arbeitsstrombremse kann auch per Fernwartung ausgeführt werden.

Gemäß einer weiteren Variante ist mittels der durch die Positionserfassungseinrichtung ermittelten und an die Steuer- und Regeleinheit weitergegebenen Signale die Ablauf- oder Schließgeschwindigkeit des Behangs bestimmbar und bei Abweichung dieser bestimmten Geschwindigkeiten von vorgegebenen Werten mittels eines Signalgebers, insbesondere eines Relaiskontaktes, wenigstens ein Warnsignal ausgebbar.

Bei diesem Warnsignal kann es sich um optische und/oder akustische Signale handeln.

Besonders vorteilhaft ist eine Ausgestaltung der Erfindung, wobei der Behang in eine mittels der Positionserfassungseinrichtung erfassten und in der Steuer- und Regeleinheit gespeicherten Zwischenposition zwischen den Endlagen bring- und, insbesondere für eine definierte Verweildauer, in dieser Position haltbar ist, insbesondere wobei bei Erreichen dieser Zwischenposition mittels eines Signalgebers, insbesondere eines Relaiskontaktes, wenigstens ein Bestätigungssignal ausgebbar ist. Eine Kenntnis über den Status der Antriebsvorrichtung ist insbesondere im Gefahrenfall vorteilhaft.

Für eine besonders vorteilhafte Ausnutzung des Bauraums des Rohrantriebs, d.h. für einen kompakten Rohrantrieb kann die Positionserfassungseinrichtung in einem Gehäuserohr des Rohrantriebs aufgenommen sein.

Die Steuer- und Regeleinheit und die Positionserfassungseinrichtung können auf einer Platine angeordnet sein, welche in das Gehäuserohr eingebracht wird.

Gemäß einer besonders vorteilhaften Ausgestaltung der Erfindung weist die Positionserfassungseinrichtung eine Schaltwelle auf, die mit einer Antriebswelle des Antriebsmotors wirkverbunden ist, wobei eine Sensoranordnung zur Positionserfassung der Schaltwelle mit der Steuer- und Regeleinheit und die Steuer- und Regeleinheit mit dem Antriebsmotor des Rohrantriebs elektronisch verbunden sind.

Besonders vorteilhaft ist, dass die Sensoranordnung ein mit der Schaltwelle wirkverbundenes Schaltzahnrad aufweist, das mit mindestens zwei Sensorzahnrädern kämmt, wobei die mindestens zwei Sensorzahnräder eine unterschiedliche Zähnezahl aufweisen und wobei jedem Sensorzahnrad ein, vorzugsweise berührungsloser Sensor zugeordnet ist.

Aufgrund der mindestens zwei vorhandenen Sensorzahnräder, die eine unterschiedliche Zähnezahl aufweisen, kann auf besonders einfache Weise ein Verdrehwinkel der Schaltwelle und damit die Position der Tür oder des Tores ermittelt werden. Der mögliche Verdrehwinkel ist hierbei auch nicht auf 360 Grad beschränkt, sondern kann auch ein Vielfaches hiervon betragen.

Insbesondere kann der berührungslose Sensor als Hall-Sensor ausgebildet sein, der mit einem fest mit dem jeweiligen Sensorzahnrad verbundenen Permanentmagneten zusammenwirkt.

Hierdurch ist eine besonders einfache und sichere Positionserfassung gewährleistet. Hierbei kann der Hall-Sensor auf der Platine unter einer Lagerschale für das jeweilige Sensorzahnrad vorgesehen sein. Der jeweilige Permanentmagnet kann dann in einem Hohlraum des jeweiligen Sensorzahnrades formschlüssig eingeordnet sein, wobei das Sensorzahnrad und der Permanentmagnet drehbar auf der Lagerschale gelagert sind. Hierdurch wird eine besonders bauraumgünstige Ausführung der Sensoranordnung geschaffen.

In einer vorteilhaften Ausgestaltung der Erfindung ist eine Übersetzung, vorzugsweise mit einem Laufring zwischen Schaltwelle und Wickelwelle vorgesehen. Der Laufring kann eine Innenverzahnung aufweisen, welche mit einer Außenverzahnung der Schaltwelle kämmt. Das Übersetzungsverhältnis kann im Bereich von 1:3 bis 1:5 liegen. Dadurch wird die Auflösung erhöht, was Vorteile bzgl. der Genauigkeit hat.

Besonders vorteilhaft ist eine Ausgestaltung der Erfindung, wobei der mit der Steuer- und Regeleinheit verbundene Schließgeschwindigkeitsregler mittels der Positionserfassungseinrichtung für eine Drehzahlbegrenzung des Antriebsmotors und/oder der Wickelwelle ansteuerbar und überwachbar ist. Gemäß einer Variante der Erfindung weist die Steuer- und Regeleinheit eine Sicherheitsabschaltung auf, wobei wenigstens eine zusätzliche Sicherheitsendlage beim Einlernen der Endlagen in der Steuer- und Regeleinheit hinterlegt wird.

Diese Sicherheitsendlage wird im Normalbetrieb nicht erreicht. Im Fehlerfall, d.h. beim Überfahren der eigentlichen Endlage wird an dieser Sicherheitsendlage der Antriebsmotor gestoppt.

Mit anderen Worten ist der softwareseitige Sicherheitsendschalter im Rohrantrieb vorgesehen, um zu verhindern, dass der Antrieb beim Überfahren der Endlage die Anlage damit beschädigt.

Ein unabhängiger Gedanke der Erfindung betrifft eine Brandschutzanlage mit einem oben beschriebenen Rohrantrieb.

Gemäß einer ersten Weiterbildung der Brandschutzanlage weist sie eine Steuer- und Regeleinheit auf, mittels welcher ein Antriebsmotor und/oder eine Arbeitsstrombremse und/oder ein Schließgeschwindigkeitsregler in Abhängigkeit von einem durch eine Positionserfassungseinrichtung ausgegebenen Signal steuer- und/oder regelbar ist bzw. sind.

Ein weiterer Gedanke der Erfindung betrifft die Verwendung einer elektronischen Positionserfassungseinrichtung, insbesondere wie oben beschrieben, in einem Rohrantrieb wie oben beschrieben, zur Erkennung bzw. Überwachung der absoluten Position eines auf einer Wickelwelle aufwickelbaren Behangs und zur Bestimmung der Drehzahl der Wickelwelle, insbesondere auch in einem Gefahrenfall und nach einem Katastrophenfall.

Dabei zeigen zum Teil schematisch:
- Figur 1: einen erfindungsgemäßen Rohrantrieb in einer Explosionsdarstellung,
- Figur 2: eine Positionserfassungseinrichtung des Rohrantriebs gemäß Figur 1 in einer Explosionsdarstellung,
- Figur 3: die Positionserfassungseinrichtung gemäß Figur 2 mit einem Motorkopf,
- Figur 4: Blockschaltbilder zum Rohrantrieb und
- Figur 5: eine Brandschutzanlage mit Rohrantrieb gemäß Figur 1 und Behang.

Gleiche oder gleichwirkende Bauteile werden in den nachfolgend dargestellten Figuren der Zeichnung anhand einer Ausführungsform mit Bezugszeichen versehen, um die Lesbarkeit zu verbessern.

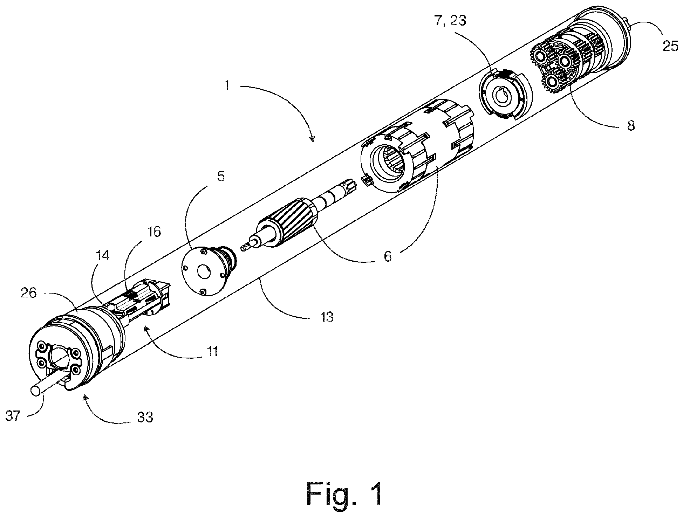

Figur 1 zeigt den erfindungsgemäßen Rohrantrieb 1 für einen auf einer Wickelwelle 24 aufwickelbaren Behang 2 in Form eines Rauchschutzvorhangs, Feuerschutzbehanges, Feuer- oder Rauchschutzabschlusses, einer Rauchschürze oder dergleichen.

Rohrantriebe 1 können bei Rauchschutzvorrichtungen eingesetzt werden, die insbesondere in einer Normalstellung geöffnet sind und die im Gefahren- oder Brandfalle herabgelassen werden, wobei der Brandschutzbehang 2 im geöffneten Zustand auf einer Wickelwelle aufgewickelt ist. In diesem Fall ist die Arbeitsstrombremse aktiv, also mit einer Bremsspannung versorgt und stellt damit den Behang in der Ruhestellung fest. Es handelt sich in diesem Fall um eine sogenannte Feststellvorrichtung.

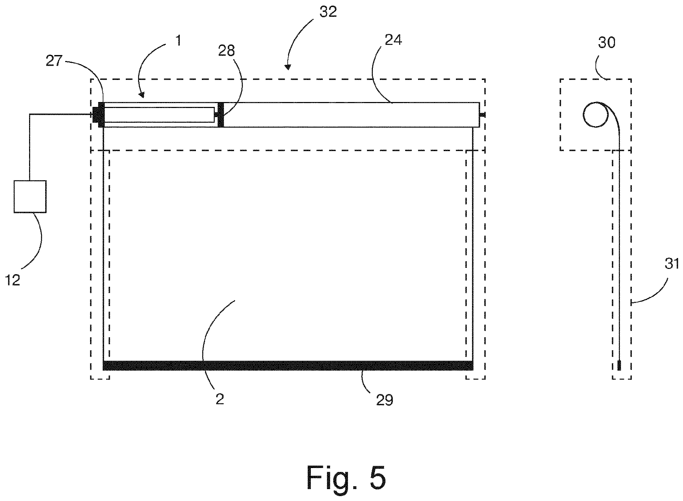

Ein solcher an der Wickelwelle 24 angeordneter Behang 2 ist zusammen mit dem Rohrantrieb 1 in Figur 5 ersichtlich, dort sowohl in einer Ansicht von vorne, als auch in Seitenansicht.

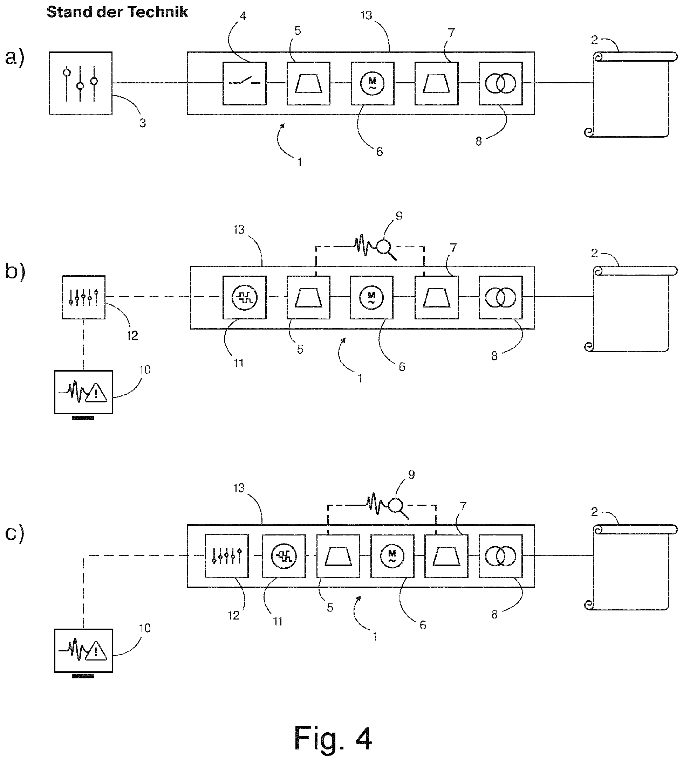

Der Rohrantrieb 1 weist einen Antriebsmotor 6 zum Verfahren des Behangs 2 zwischen einer Öffnungs- und einer Schließstellung auf, wie in Figur 1 ersichtlich und schematisch in den Blockschaltbildern gemäß Figur 4 dargestellt ist. Ebenfalls in Figur 1 ersichtlich ist ein Motorkopf 33 sowie eine Anschlussleitung 37 für den elektrischen Anschluss.

Dort ist ebenfalls schematisch eine Arbeitsstrombremse 5 zum Halten des Behangs 2 in einer vorgegebenen Position sowie ein Schließgeschwindigkeitsregler 7 zum Abbremsen des Behangs 2 während des Abrollens ersichtlich. Der Schließgeschwindigkeitsregler 7 ist vorliegend als Fliehkraftbremse 23 ausgebildet, kann aber auch eine elektromotorische Bremse mit einem Bremskondensator oder eine Stotterbremse sein. Mittels des Schließgeschwindigkeitsreglers 7 bzw. der Fliehkraftbremse 23 ist die Ablaufdrehzahl der Wickelwelle 24, insbesondere die Ablaufgeschwindigkeit des Behangs 2 regelbar.

An derartige Brandschutzanlagen werden besondere Anforderungen gestellt, insbesondere in einem Gefahrenfall oder Katastrophenfall.

Im Katastrophenfall steht keine elektrische Versorgungsspannung mehr zur Verfügung, weder am Antrieb 1 selbst, noch an einer Steuer- und Regeleinheit 12 für den Antrieb 1. Dies wird ausgelöst durch einen Stromausfall, einen Defekt der Netzversorgung oder einen Defekt der elektrischen Leitungen.

Der Behang 2 rollt selbsttätig ab, da die Arbeitsstrombremse 5 den Behang 2 freigibt, sobald keine Spannung mehr an dieser anliegt. Der Katastrophenfall endet durch Instandsetzung etwaiger Schäden und/oder Wiederkehr der Netzversorgung.

Im Gefahrenfall, ausgelöst durch eine übergeordnete Steuerung (Brandmeldezentrale) oder Rauchmelder, Wärmesensoren o.ä. aufgrund eines Alarms, einer detektierten Brandentstehung oder auch während einer Wartung/monatlichen Regelüberprüfung, wird ausschließlich die Bremsspannung unterbrochen und die Arbeitsstrombremse 5 damit deaktiviert. Die Feststellvorrichtung wird damit unwirksam und die Anlage bzw. der Behang 2 verlässt selbsttätig, durch ihr Eigengewicht, die Normalstellung. Die elektrische Netzversorgung ist im Gefahrenfall weiter intakt. Der Gefahrenfall endet durch Quittieren des Alarms und Wiederkehr der Bremsspannung.

Da im Gefahrenfall/Katastrophenfall notwendigerweise die Arbeitsstrombremse 5 deaktiviert ist, um den Behang 2, beispielsweise Rauchschutzvorhang oder Feuerschutzbehang, in Schließstellung überzuführen, besteht die Gefahr, dass ein unkontrolliertes Herunterfahren des Behangs 2 in die Schließstellung auftritt, wodurch der Behang 2 aufgrund der auftretenden Beschleunigung bzw. Momente beschädigt werden kann. Zudem besteht auch die Gefahr der Verletzung der im Gefahrenfall den Behang 2 passierenden bzw. unter dem Behang 2 hindurcheilenden Personen.

Im Gefahren- wie auch Katastrophenfall würde der Behang 2 demnach schnell ablaufen. Aus diesem Grund ist der Schließgeschwindigkeitsregler 7, 23 vorgesehen, welcher als Zusatzbremseinrichtung dient und im eigentlichen Sinn keine Haltefunktion ermöglichen soll.

Aus Figur 1 geht ferner hervor, dass der Antriebsmotor 6 ein Getriebe 8, vorliegend ein Planetengetriebe antreibt.

Wie Figur 1 weiter zeigt, weist der Rohrantrieb 1 vorliegend eine ebenfalls im Rohrgehäuse 13 angeordnete elektronische Positionserfassungseinrichtung 11 zur Erkennung bzw. Überwachung 9 der absoluten Position des Behangs 2 und zur Bestimmung der Drehzahl der Wickelwelle 24, insbesondere auch in einem Gefahrenfall, auf. Diese Positionserfassungseinrichtung 11 ist vorliegend als Absolutwertgeber, insbesondere als Absolutwertdrehgeber ausgebildet.

Den Figuren 4 und 5 ist zu entnehmen, dass die Positionserfassungseinrichtung 11 vorliegend mit einer Steuer- und Regeleinheit 12 des Rohrantriebs 1 verbunden ist, mittels welcher der Antriebsmotor 6 und die Arbeitsstrombremse 5 und der Schließgeschwindigkeitsregler 7, 23 in Abhängigkeit von einem durch die Positionserfassungseinrichtung 11 ausgegebenen Signal regelbar sind.

Die Figuren 4 a), b) und c) zeigen Blockschaltbilder von Antrieben. Gemäß Figur 4 a) ist ein aus dem Stand der Technik bekannter Rohrantrieb 1 mit einer im Gehäuserohr 13 angeordneten mechanischen Endabschaltung 4 an einer Motor-Steuerung 3 angeschlossen. Die Endlagen werden über Einstellritzel am Motorkopf 33 des Antriebs 1 während der Inbetriebnahme einmalig eingestellt. Der Antriebsmotor 6 treibt das Getriebe 8 an. Zwischen diesen Komponenten ist der Schließgeschwindigkeitsregler 7, 23 angeordnet, welcher mit der Antriebswelle des Antriebsmotors 6 verbunden ist. Im motorischen Betrieb bewegt der Rohrantrieb 1 den Behang 2 in Auf- oder Abrichtung durch Rechts- bzw. Linkslauf. Um den Antrieb 1 in einer Position zu halten, ist die Arbeitsstrombremse 5 mit dem Antriebsmotor 6 verbunden. In einer Grundstellung befindet sich der Behang 2 in oberer Position (Endlage). Im Gefahrenfall öffnet die Arbeitsstrombremse 5 und gibt den Behang frei. Aufgrund der Gravitation rollt der Behang 2 selbsttätig ab. Um die Schließgeschwindigkeit zu begrenzen / zu regeln begrenzt der Schließgeschwindigkeitsregler 7 die Drehzahl. Der Behang 2 läuft somit kontrolliert ab.

Die Motor-Steuerung 3 ist in der Lage den Motor 6 motorisch zu fahren, zu stoppen und die obere und/oder untere Position des Rohrantriebs 1 zu detektieren.

In den Figuren 4 b) und c) sind erfindungsgemäße Ausgestaltungen des Rohrantriebs 1 dargestellt. Unterschiedlich gegenüber der bekannten Ausführungsform gemäß Figur 4 a) ist, dass der Rohrantrieb 1 die im Gehäuserohr 13 angeordnete Positionserfassungseinrichtung 11 aufweist, welche an der Steuer- und Regeleinheit 12 angeschlossen ist. Die Endlagen werden über die Steuer- und Regeleinheit 12 eingestellt.

Wie erwähnt, befindet sich der Behang 2 in der Grundstellung in oberer Position (Endlage). Diese Position ist vorliegend eine vorgegebene Position. Die Steuer- und Regeleinheit 12 ist in der Lage, den Motor 6 nicht nur motorisch zu fahren, zu stoppen, die obere und untere sowie auch jegliche andere absolute Position des Rohrantriebs 1 zu detektieren und/oder exakt anzufahren. Darüber hinaus kann die Steuer- und Regeleinheit 12 den Behang in beliebig einstellbaren, absoluten Zwischenpositionen anhalten. Ferner ist die Steuer- und Regeleinheit 12 mit Hilfe der Positionserfassungseinrichtung 11 in der Lage eine Drehzahl zu messen und damit die Funktion und/oder Drehzahl der Arbeitsstrombremse 5 und/oder des Schließgeschwindigkeitsreglers 7 bzw. Fliehkraftbremse 23 zu überwachen 9. Alle zuvor genannten Eigenschaften können durch ein Monitoring 10 ausgegeben und visualisiert werden.

Im Gegensatz zur Ausführungsform gemäß Figur 4 b) ist die Steuer- und Regeleinheit 12 gemäß Figur 4 c) im Gehäuserohr 13 des Rohrantriebs 1 angeordnet.

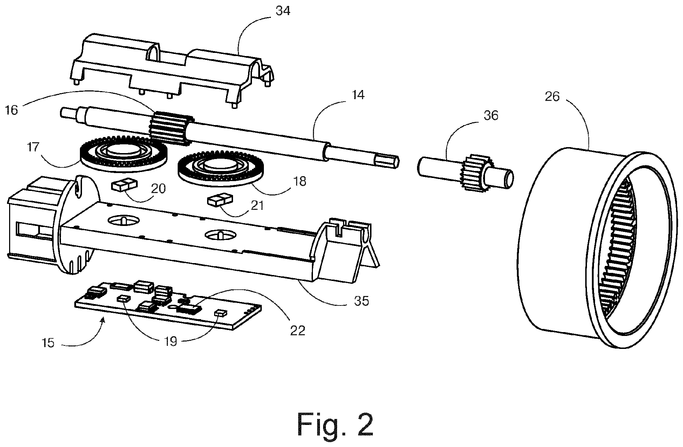

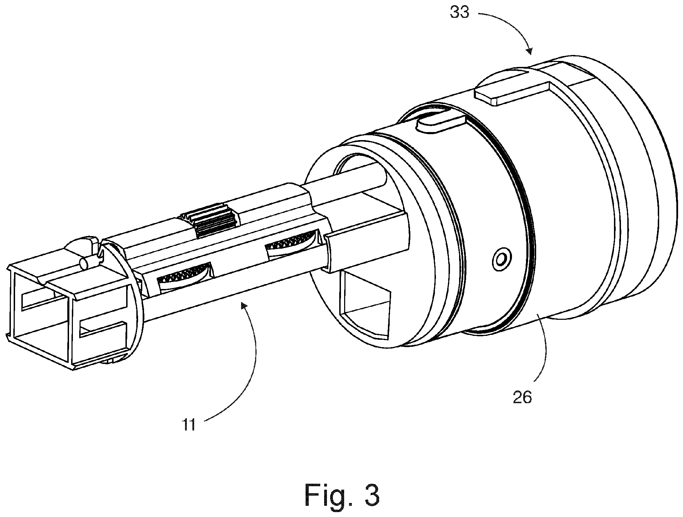

Die Steuer- und Regeleinheit 12 und/oder die Positionserfassungseinrichtung 11 weist eine Analyseelektronik zur Bestimmung von Daten, insbesondere Positionsdaten und/oder Abschaltdaten des Behangs 2 und/oder der Wickelwelle 24, und einen Datenspeicher 22 zur Abspeicherung dieser Daten auf (vgl. Figur 2). Darüber hinaus zeigt die Darstellung gemäß Figuren 2 und 3 die erfindungsgemäße Positionserfassungseinrichtung 11 in einer Explosionsansicht (Fig. 2) und im montierten Zustand (Fig. 3). Auf einer Platine ist eine Sensoranordnung 15 mit zwei berührungslosen Sensororganen 19 sowie der Datenspeicher 22 angeordnet. Diese Platine ist auf einem Platinenträger 35 angeordnet (vgl. Fig. 2).

Zur Verbindung der Positionserfassungseinrichtung 11 mit dem Antriebsmotor 6 des Rohrantriebs 1 ist eine Schaltwelle 14 vorgesehen, wie Figur 2 weiter zeigt. Diese Schaltwelle 14 ist auch in Figur 1 zu erkennen.

Insbesondere die Figuren 1 und 2 sowie Figuren 4 b) und c) zeigen, dass die Schaltwelle 14 der Positionserfassungseinrichtung 11 mit der Antriebswelle des Antriebsmotors 6 wirkverbunden ist. Die Steuer- und Regeleinheit 12 ist mit dem Antriebsmotor 6 des Rohrantriebs 1 elektronisch verbunden. Die Sensoranordnung 15 zur Positionserfassung der Schaltwelle 14 ist mit der Steuer- und Regeleinheit 12 elektronisch verbunden.

Die Detektion einer Position der Schaltwelle 14 und somit des Behangs 2 wird auch bei mehreren vollständigen Umdrehungen durch die Sensoranordnung 15 derart detektiert, dass ein eindeutiger Rückschluss auf eine Position des durch den Brandschutzrohrantrieb 1 bewegten Behangs 2 möglich ist. Die Sensoranordnung 15 weist hierzu die zwei auf der Platine angeordneten Sensororgane 19 auf, die vorliegend als Hall-Sensoren ausgebildet sind (vgl. Fig. 2). Diese Hall-Sensoren 19 wirken auf bekannte Weise mit Permanentmagneten 20, 21 zusammen, die vorzugsweise formschlüssig in einem Hohlraum von Sensorzahnrädern 17, 18 angeordnet sind. Die Verzahnung bzw. Positionserfassungseinrichtung 11 ist in einem Gehäuse mit einem Deckel, insbesondere einer Modulabdeckung 34 eingehaust.

Diese beiden Sensorzahnräder 17, 18 weisen vorliegend unterschiedliche Zähnezahlen auf und kämmen jeweils mit dem mit der Schaltwelle 14 verbundenen Schaltzahnrad 16.

Durch die unterschiedliche Zähnezahl der Sensorzahnräder 17, 18 weisen diese Sensorzahnräder 17, 18 und damit auch die zugehörigen Permanentmagnete 20, 21 bei einer Verdrehung des Schaltzahnrades 16 unterschiedliche Verdrehwinkel auf, wodurch eine Bestimmung der Absolutposition des zu überwachenden Behangs auch bei mehreren vollständigen Umdrehungen der Schaltwelle 14 und damit des Schaltzahnrades 16 durch die Hall-Sensoren 19 möglich ist.

Auf diese Weise wird vorliegend mittels der durch die Positionserfassungseinrichtung 11 ermittelten und an die Steuer- und Regeleinheit 12 weitergegebenen Signale die Ablauf- oder Schließgeschwindigkeit des Behangs 2 bestimmt. Bei Abweichung dieser bestimmten Geschwindigkeiten von vorgegebenen Werten kann mittels eines Signalgebers, insbesondere eines Relaiskontaktes, ein Warnsignal ausgegeben werden.

Insbesondere im Gefahrenfalle kann aufgrund der Erfindung die Position des Behangs 2 bestimmt und/oder die Drehzahl der Wickelwelle 24 ermittelt werden.

Im hier beschriebenen Ausführungsbeispiel kann der mit der Steuer- und Regeleinheit 12 verbundene Schließgeschwindigkeitsregler 7, 23 mittels der Positionserfassungseinrichtung 11 für eine Drehzahlbegrenzung des Antriebsmotors 6 und/oder der Wickelwelle 24 angesteuert und überwacht werden.

Folglich ist der Behang 2 im Gefahrenfall in eine mittels der Positionserfassungseinrichtung 11 erfassten und in der Steuer- und Regeleinheit 12 gespeicherten Zwischenposition zwischen den Endlagen bring- und, insbesondere für eine definierte Verweildauer, in dieser Position haltbar. Vorliegend wird bei Erreichen dieser Zwischenposition wenigstens ein Bestätigungssignal mittels eines Signalgebers, insbesondere eines Relaiskontaktes, ausgegeben.

Die Figuren 2 und 3 zeigen weiter, dass zwischen der Schaltwelle 14 und der Wickelwelle 24 eine Übersetzung vorgesehen ist, welche vorliegend durch einen Laufring 26 mit einer Innenverzahnung gebildet ist, die mit einer Außenverzahnung einer an der Schaltwelle 14 angeordneten Adapterritzel 36 kämmt.

Wie aus Figur 1 und Figuren 4 b) und c) weiter hervorgeht, ist die Positionserfassungseinrichtung 11 in einem Rohrgehäuse 13 des Rohrantriebs 1 aufgenommen.

Die Steuer- und Regeleinheit 12 kann eine Sicherheitsabschaltung aufweisen, wobei wenigstens eine zusätzliche Sicherheitsendlage beim Einlernen der Endlagen in der Steuereinheit 12 hinterlegt wird.

Figur 5 zeigt schematisch eine Brandschutzanlage 32 mit einem oben beschriebenen Rohrantrieb 1.

Aus dieser Figur 5 geht weiter ein Laufringadapter 27 hervor, in welchem der Laufring 26 gelagert ist. Der Laufringadapter 27 dient zum Lagern der Wickelwelle 24.

Mittels des in Figur 5 schematisch dargestellten Mitnehmers 28 wird die Wickelwelle 24 mit einer Abtriebswelle 25 des Rohrantriebs 1 drehfest verbunden (vgl. Fig. 1).

Eine in Figur 5 dargestellte Endleiste 29 ist am unteren Ende des Behangs vorgesehen, d. h. dem Ende des Behangs, das nicht direkt an die Wickelwelle 24 angekoppelt ist. Diese Endleiste 29 dient dazu, den Behang 2 zu beschweren und straff zu halten, um ein optimales Auf- und Abbewegen des Behangs 2 zu gewährleisten, insbesondere auch im Gefahrenfall. Das Verfahren des Behangs 2 wird durch die beidseitig vorgesehenen Führungsschienen 31 für den Behang 2 weiter optimiert.

Der Rohrantrieb 1 ist zusammen mit der Wickelwelle 24 vorliegend in einem Gehäuse bzw. Kasten 30 aufgenommen, wie Figur 5 weiter zeigt.

### Bezugszeichenliste

- 1: Rohrantrieb
- 2: Behang
- 3: Motor-Steuerung
- 4: mechanische Endabschaltung - Stand der Technik
- 5: Arbeitsstrombremse
- 6: Antriebsmotor
- 7: Schließgeschwindigkeitsregler
- 8: Getriebe , Planetengetriebe
- 9: Überwachung
- 10: Monitoring
- 11: Positionserfassungseinrichtung
- 12: Steuer- und Regeleinheit
- 13: Rohrgehäuse
- 14: Schaltwelle
- 15: Sensoranordnung
- 16: Schaltzahnrad
- 17: Sensorzahnrad
- 18: Sensorzahnrad
- 19: berührungsloses Sensororgan
- 20: Permanentmagnet
- 21: Permanentmagnet
- 22: Datenspeicher
- 23: Fliehkraftbremse
- 24: Wickelwelle
- 25: Abtriebswelle
- 26: Laufring
- 27: Laufringadapter
- 28: Mitnehmer
- 29: Endleiste
- 30: Kasten
- 31: Führungsschiene
- 32: Brandschutzanlage
- 33: Motorkopf
- 34: Modulabdeckung
- 35: Platinenträger
- 36: Adapterritzel
- 37: Anschlussleitung

## Patentansprüche

1. Rohrantrieb (1) für einen auf einer Wickelwelle (24) aufwickelbaren Behang (2) in Form eines Rauchschutzvorhangs, Feuerschutzbehanges, Feuer- oder Rauchschutzabschlusses, einer Rauchschürze oder dergleichen, mit einem Antriebsmotor (6) zum Verfahren des Behangs (2) zwischen einer Öffnungs- und einer Schließstellung, mit einer Arbeitsstrombremse (5) zum Halten des Behangs (2) in einer vorgegebenen Position und mit einem Schließgeschwindigkeitsregler (7) zum Abbremsen des Behangs (2) während des Abrollens, **dadurch gekennzeichnet, dass** der Rohrantrieb (1) eine elektronische Positionserfassungseinrichtung (11) zur Erkennung bzw. Überwachung der absoluten Position des Behangs (2) und zur Bestimmung der Drehzahl der Wickelwelle (24) auch in einem Gefahrenfall, in dem die Arbeitsstrombremse (5) und der Antriebsmotor (6) in einem spannungslosen Zustand sind, und unmittelbar nach einem Katastrophenfall, in dem der Antrieb (1) in einem spannungslosen Zustand ist, aufweist.

2. Rohrantrieb (1) nach Anspruch 1, **dadurch gekennzeichnet, dass** der Schließgeschwindigkeitsregler (7) eine Fliehkraftbremse oder eine elektromotorische Bremse mit einem Bremskondensator oder eine Stotterbremse ist.

3. Brandschutzrohrantrieb (1) nach einem der Ansprüche 1 oder 2, **dadurch gekennzeichnet, dass** die Positionserfassungseinrichtung (11) mit einer Steuer- und Regeleinheit (12) des Rohrantriebs (1) verbunden ist, mittels welcher der Antriebsmotor (6) und/oder die Arbeitsstrombremse (5) und/oder der Schließgeschwindigkeitsregler (7) in Abhängigkeit von einem durch die Positionserfassungseinrichtung (11) ausgegebenen Signal steuer- und/oder regelbar ist bzw. sind.

4. Rohrantrieb (1) nach einem der Ansprüche 1 bis 3, **dadurch gekennzeichnet, dass** die Positionserfassungseinrichtung (11) als Absolutwertgeber, insbesondere als Absolutwertdrehgeber ausgebildet ist.

5. Rohrantrieb (1) nach einem der vorherigen Ansprüche 3 bis 4, wenn abhängig von Anspruch 3, **dadurch**
**gekennzeichnet, dass** wenigstens eine Endposition bzw. Endlage für den Behang elektronisch in der Steuer- und Regeleinheit (12) abgespeichert ist.

6. Rohrantrieb (1) nach einem der vorherigen Ansprüche 1 bis 5, **dadurch gekennzeichnet, dass** mittels des Schließgeschwindigkeitsreglers (7) die Ablaufdrehzahl der Wickelwelle (24), insbesondere die Ablaufgeschwindigkeit des Behangs (2) regelbar ist.

7. Rohrantrieb (1) nach einem der Ansprüche 3 bis 6, wenn abhängig von Anspruch 3, **dadurch**
**gekennzeichnet, dass** eine elektronische Endabschaltung (4) mittels der mit der Positionserfassungseinrichtung (11) verbundenen Steuer- und Regeleinheit (12) ansteuerbar ist.

8. Rohrantrieb (1) nach einem der Ansprüche 3 bis 7, wenn abhängig von Anspruch 3, **dadurch**
**gekennzeichnet, dass** die Steuer- und Regeleinheit (12) für eine Überwachung des Schließgeschwindigkeitsreglers (7) und/oder der Arbeitsstrombremse (5) ausgebildet ist.

9. Rohrantrieb (1) nach einem der Ansprüche 3 bis 8, wenn abhängig von Anspruch 3, **dadurch**
**gekennzeichnet, dass** die Steuer- und Regeleinheit (12) und/oder die Positionserfassungseinrichtung (11) eine Analyseelektronik zur Bestimmung von Daten und einen Datenspeicher (22) zur Abspeicherung dieser Daten aufweist.

10. Rohrantrieb (1) nach Anspruch 9, **dadurch gekennzeichnet, dass** die Daten Positionsdaten und/oder Abschaltdaten des Behangs (2) und/oder der Wickelwelle (24) sind.

11. Rohrantrieb (1) nach einem der Ansprüche 3 bis 10, wenn abhängig von Anspruch 3, **dadurch**
**gekennzeichnet, dass** mittels der durch die Positionserfassungseinrichtung (11) ermittelten und an die Steuer- und Regeleinheit (12) weitergegebenen Signale die Ablauf- oder Schließgeschwindigkeit des Behangs (2) bestimmbar und bei Abweichung dieser bestimmten Geschwindigkeiten von vorgegebenen Werten mittels eines Signalgebers, insbesondere eines Relaiskontaktes, wenigstens ein Warnsignal ausgebbar ist.

12. Rohrantrieb (1) nach einem der Ansprüche 3 bis 11, wenn abhängig von Anspruch 3, **dadurch**
**gekennzeichnet, dass** der Behang (2) in eine mittels der Positionserfassungseinrichtung (11) erfassten und in der Steuer- und Regeleinheit (12) gespeicherten Zwischenposition zwischen den Endlagen bring- und, insbesondere für eine definierte Verweildauer, in dieser Position haltbar ist, insbesondere dass bei Erreichen dieser Zwischenposition mittels eines Signalgebers, insbesondere eines Relaiskontaktes, wenigstens ein Bestätigungssignal ausgebbar ist.

13. Rohrantrieb (1) nach einem der vorherigen Ansprüche, **dadurch gekennzeichnet, dass** die Positionserfassungseinrichtung (11) in einem Gehäuserohr (13) des Brandschutzrohrantriebs (1) aufgenommen ist.

14. Rohrantrieb (1) nach einem der vorherigen Ansprüche 3 bis 13, wenn abhängig von Anspruch 3, **dadurch**
**gekennzeichnet, dass** die Positionserfassungseinrichtung (11) eine Schaltwelle (14) aufweist, die mit einer Antriebswelle des Antriebsmotors (6) wirkverbunden ist, wobei eine Sensoranordnung (15) zur Positionserfassung der Schaltwelle (14) mit der Steuer- und Regeleinheit (12) elektronisch verbunden ist, wobei die Steuer- und Regeleinheit (12) mit dem Antriebsmotor (6) des Rohrantriebs (1) elektronisch verbunden ist.

15. Rohrantrieb (1) nach Anspruch 14, **dadurch gekennzeichnet, dass** die Sensoranordnung (15) ein mit der Schaltwelle (14) wirkverbundenes Schaltzahnrad (16) aufweist, das mit mindestens zwei Sensorzahnrädern (17, 18) kämmt, wobei die mindestens zwei Sensorzahnräder (17, 18) eine unterschiedliche Zähnezahl aufweisen und wobei jedem Sensorzahnrad (17, 18) ein, vorzugsweise berührungsloser Sensor (19) zugeordnet ist.

16. Rohrantrieb (1) nach Anspruch 15, **dadurch gekennzeichnet, dass** der berührungslose Sensor (19) als Hall-Sensor ausgebildet ist, der mit einem fest mit dem jeweiligen Sensorzahnrad (17, 18) verbundenen Permanentmagneten (20, 21) zusammenwirkt.

17. Rohrantrieb (1) nach einem der vorherigen Ansprüche 13 bis 16,
**dadurch gekennzeichnet, dass** zwischen Schaltwelle (14) und Wickelwelle (24) eine Übersetzung, vorzugsweise mit einem Laufring (26) mit einer Innenverzahnung, welcher mit einer an der Schaltwelle (14) vorgesehenen Außenverzahnung kämmt, vorgesehen ist.

18. Rohrantrieb (1) nach einem der vorherigen Ansprüche, wenn abhängig von Anspruch 3, **dadurch**
**gekennzeichnet, dass** der mit der Steuer- und Regeleinheit (12) verbundene Schließgeschwindigkeitsregler (7) mittels der Positionserfassungseinrichtung (11) für eine Drehzahlbegrenzung des Antriebsmotors (6) und/oder der Wickelwelle (24) ansteuerbar und überwachbar ist.

19. Rohrantrieb (1) nach einem der vorherigen Ansprüche 3 bis 18, wenn abhängig von Anspruch 3, **dadurch**
**gekennzeichnet, dass** die Steuer- und Regeleinheit (12) eine Sicherheitsabschaltung aufweist, wobei wenigstens eine zusätzliche Sicherheitsendlage beim Einlernen der Endlagen in der Steuereinheit (12) hinterlegt wird.

20. Brandschutzanlage (32) mit einem Rohrantrieb (1) nach einem der vorherigen Ansprüche.

21. Brandschutzanlage (32) nach Anspruch 20, **dadurch gekennzeichnet, dass** sie eine Steuer- und Regeleinheit (12) aufweist, mittels welcher ein Antriebsmotor (6) und/oder eine Arbeitsstrombremse (5) und/oder ein Schließgeschwindigkeitsregler (7) in Abhängigkeit von einem durch eine Positionserfassungseinrichtung (11) ausgegebenen Signal steuer- und/oder regelbar ist bzw. sind.

22. Verwendung einer elektronischen Positionserfassungseinrichtung (11) in einem Rohrantrieb (1) nach einem der vorherigen Ansprüche 1-19 zur
Erkennung bzw. Überwachung der absoluten Position eines auf einer Wickelwelle (24) aufwickelbaren Behangs (2) und zur Bestimmung der Drehzahl der Wickelwelle (24) auch in einem Gefahrenfall, in dem die Arbeitsstrombremse (5) und der Antriebsmotor (6) des Rohrantriebs (1) in einem spannungslosen Zustand sind, und unmittelbar nach einem Katastrophenfall, in dem der Rohrantrieb (1) in einem spannungslosen Zustand ist.

## Claims

1. Tubular drive (1) for a curtain (2) in the form of a smoke protection curtain, fire protection curtain, fire or smoke protection closure, a smoke apron or the like able to be wound up on a winding shaft (24), having a drive motor (6) for displacing the curtain (2) between an open and a closed position, having an operating current brake (5) for holding the curtain (2) in a predefined position, and having a closing speed controller (7) for decelerating the curtain (2) during unrolling, **characterized in that** the tubular drive (1) has an electronic position detection device (11) for detecting or monitoring the absolute position of the curtain (2) and for determining the rotating speed of the winding shaft (24), even in a hazardous situation in which the operating current brake (5) and the drive motor (6) are in a dead-voltage state, and immediately after a catastrophic case in which the drive (1) is in a dead-voltage state.

2. Tubular drive (1) according to Claim 1, **characterized in that** the closing speed controller (7) is a centrifugal brake or an electromotive brake with a brake capacitor, or is an intermittent brake.

3. Fire protection tubular drive (1) according to one of Claims 1 and 2, **characterized in that** the position detection device (11) is connected to an open-loop and closed-loop control unit (12) of the tubular drive (1), by means of which the drive motor (6) and/or the operating current brake (5) and/or the closing speed regulator (7) are/is able be controlled in an open-loop and/or closed-loop as a function of a signal emitted by the position detection device (11).

4. Tubular drive (1) according to one of Claims 1 to 3, **characterized in that** the position detection device (11) is configured as an absolute value encoder, in particular as an absolute value rotary encoder.

5. Tubular drive (1) according to one of preceding Claims 3 to 4 if dependent on Claim 3, **characterized in that** at least one end position or terminal position for the curtain is stored electronically in the open-loop and closed-loop control unit (12).

6. Tubular drive (1) according to one of preceding Claims 1 to 5, **characterized in that** the unwinding speed of the winding shaft (24), in particular the unwinding speed of the curtain (2), is able to be controlled in a closed-loop by means of the closing speed regulator (7).

7. Tubular drive (1) according to one of Claims 3 to 6 if dependent on Claim 3, **characterized in that** an electronic end switch (4) is able to be actuated by means of the open-loop and closed-loop control unit (12) connected to the position detection device (11).

8. Tubular drive (1) according to one of Claims 3 to 7 if dependent on Claim 3, **characterized in that** the open-loop and closed-loop control unit (12) is configured for monitoring the closing speed regulator (7) and/or the operating current brake (5).

9. Tubular drive (1) according to one of Claims 3 to 8 if dependent on Claim 3, **characterized in that** the open-loop and closed-loop control unit (12) and/or the position detection device (11) have/has an analysis electronics unit for determining data, and a data memory (22) for storing this data.

10. Tubular drive (1) according to Claim 9, **characterized in that** the data is position data and/or switch-off data of the curtain (2) and/or of the winding shaft (24).

11. Tubular drive (1) according to one of Claims 3 to 10 if dependent on Claim 3, **characterized in that** the unwinding or closing speed of the curtain (2) is able to be determined by means of the signals ascertained by the position detection device (11) and forwarded to the open-loop and closed-loop control unit (12) and, if these determined speeds deviate from predefined values, at least one warning signal can be emitted by means of a signal transducer, in particular a relay contact.

12. Tubular drive (1) according to one of Claims 3 to 11 if dependent on Claim 3, **characterized in that** the curtain (2) is able to be brought to an intermediate position, between the end positions, which is detected by means of the position detection device (11) and stored in the open-loop and closed-loop control unit(12) and is in particular able to be held in this position for a defined holding time, in particular **in that** upon reaching this intermediate position, at least one activation signal is able to be emitted by means of a signal transducer, in particular a relay contact.

13. Tubular drive (1) according to one of the preceding claims, **characterized in that** the position detection device (11) is received in a tubular housing (13) of the fire protection tubular drive (1).

14. Tubular drive (1) according to one of preceding Claims 3 to 13 if dependent on Claim 3, **characterized in that** the position detection device (11) has a switching shaft (14) which is operatively connected to a drive shaft of the drive motor (6), wherein a sensor assembly (15) for detecting the position of the switching shaft (14) is electronically connected to the open-loop and closed-loop control unit (12), wherein the open-loop and closed-loop control unit (12) is electronically connected to the drive motor (6) of the tubular drive (1).

15. Tubular drive (1) according to Claim 14, **characterized in that** the sensor assembly (15) has a switching gear (16) which is operatively connected to the switching shaft (14) and meshes with at least two sensor gears (17, 18), wherein the at least two sensor gears (17, 18) have different tooth counts, and wherein each sensor gear (17, 18) is assigned one preferably contactless sensor (19).

16. Tubular drive (1) according to Claim 15, **characterized in that** the contactless sensor (19) is configured as a Hall sensor which interacts which a permanent magnet (20, 21) fixedly connected to the respective sensor gear (17, 18).

17. Tubular drive (1) according to one of preceding Claims 13 to 16, **characterized in that** a transmission, preferably having a race (26) which has an internal toothing and meshes with an external toothing provided on the switching shaft (14), is provided between the switching shaft (14) and the winding shaft (24).

18. Tubular drive (1) according to one of the preceding claims if dependent on Claim 3, **characterized in that** the closing speed regulator (7) connected to the open-loop and closed-loop control unit (12) is able to be actuated and monitored by means of the position detection device (11) for limiting the rotating speed of the drive motor (6) and/or of the winding shaft (24).

19. Tubular drive (1) according to one of preceding Claims 3 to 18 if dependent on Claim 3, **characterized in that** the open-loop and closed-loop control unit (12) has a safety shutdown, wherein at least one additional safety end position is stored in the control unit (12) when learning the end positions.

20. Fire protection system (32) having a tubular drive (1) according to one of the preceding claims.

21. Fire protection system (32) according to Claim 20, **characterized in that** it has an open-loop and closed-loop control unit (12) by means of which a drive motor (6) and/or an operating current brake (5) and/or a closing speed regulator (7) are/is able be controlled in an open-loop and/or closed-loop as a function of a signal emitted by a position detection device (11).

22. Use of an electronic position detection device (11) in a tubular drive (1) according to one of preceding Claims 1 to 19 for detecting or monitoring the absolute position of a curtain (2) able to be wound up on a winding shaft (24) and for determining the rotating speed of the winding shaft (24), even in a hazardous situation in which the operating current brake (5) and the drive motor (6) of the tubular drive (1) are in a dead-voltage state, and immediately after a catastrophic case in which the tubular drive (1) is in a dead-voltage state.

## Revendications

1. Entraînement tubulaire (1) pour un tablier (2) pouvant être enroulé sur un arbre d'enroulement (24), sous la forme d'un rideau pare-fumée, d'un tablier coupe-feu, d'un dispositif de fermeture coupe-feu ou pare-fumée, d'une jupe pare-fumée ou similaire, avec un moteur d'entraînement (6) pour déplacer le tablier (2) entre une position d'ouverture et une position de fermeture, avec un frein de courant de travail (5) pour maintenir le tablier (2) dans une position prédéfinie et avec un régulateur de vitesse de fermeture (7) pour freiner le tablier (2) pendant le déroulement, **caractérisé en ce que** l'entraînement tubulaire (1) présente un appareil électronique de détection de position (11) pour la reconnaissance ou la surveillance de la position absolue du tablier (2) et pour déterminer la vitesse de rotation de l'arbre d'enroulement (24), même dans un cas de danger dans lequel le frein de courant de travail (5) et le moteur d'entraînement (6) sont dans un état hors tension, et immédiatement après un cas de catastrophe dans lequel l'entraînement (1) est dans un état hors tension.

2. Entraînement tubulaire (1) selon la revendication 1, **caractérisé en ce que** le régulateur de vitesse de fermeture (7) est un frein centrifuge ou un frein électromoteur avec un condensateur de freinage ou un frein à crans.

3. Entraînement tubulaire de protection contre l'incendie (1) selon l'une quelconque des revendications 1 ou 2, **caractérisé en ce que** l'appareil de détection de position (11) est relié à une unité de commande et de régulation (12) de l'entraînement tubulaire (1), au moyen de laquelle le moteur d'entraînement (6) et/ou le frein de courant de travail (5) et/ou le régulateur de vitesse de fermeture (7) peut ou peuvent être commandé(s) et/ou régulé(s) en fonction d'un signal émis par l'appareil de détection de position (11).

4. Entraînement tubulaire (1) selon l'une quelconque des revendications 1 à 3, **caractérisé en ce que** l'appareil de détection de position (11) est réalisé sous forme de codeur absolu, notamment sous forme de codeur rotatif absolu.

5. Entraînement tubulaire (1) selon l'une quelconque des revendications 3 à 4 précédentes, lorsqu'elles dépendent de la revendication 3, **caractérisé en ce qu'**au moins une position finale ou situation finale pour le tablier est mémorisée électroniquement dans l'unité de commande et de régulation (12).

6. Entraînement tubulaire (1) selon l'une quelconque des revendications 1 à 5 précédentes, **caractérisé en ce que** la vitesse de rotation de déroulement de l'arbre d'enroulement (24), notamment la vitesse de déroulement du tablier (2), peut être régulée au moyen du régulateur de vitesse de fermeture (7).

7. Entraînement tubulaire (1) selon l'une quelconque des revendications 3 à 6, lorsqu'elles dépendent de la revendication 3, **caractérisé en ce qu'**une coupure électronique finale (4) peut être commandée au moyen de l'unité de commande et de régulation (12) reliée à l'appareil de détection de position (11).

8. Entraînement tubulaire (1) selon l'une quelconque des revendications 3 à 7, lorsqu'elles dépendent de la revendication 3, **caractérisé en ce que** l'unité de commande et de régulation (12) est réalisée pour une surveillance du régulateur de vitesse de fermeture (7) et/ou du frein de courant de travail (5).

9. Entraînement tubulaire (1) selon l'une quelconque des revendications 3 à 8, lorsqu'elles dépendent de la revendication 3, **caractérisé en ce que** l'unité de commande et de régulation (12) et/ou l'appareil de détection de position (11) présente une électronique d'analyse pour déterminer des données et une mémoire de données (22) pour mémoriser ces données.

10. Entraînement tubulaire (1) selon la revendication 9, **caractérisé en ce que** les données sont des données de position et/ou des données d'arrêt du tablier (2) et/ou de l'arbre d'enroulement (24).

11. Entraînement tubulaire (1) selon l'une quelconque des revendications 3 à 10, lorsqu'elles dépendent de la revendication 3, **caractérisé en ce qu'**au moyen des signaux déterminés par l'appareil de détection de position (11) et transmis à l'unité de commande et de régulation (12), la vitesse de déroulement ou de fermeture du tablier (2) peut être déterminée et, en cas d'écart de ces vitesses déterminées par rapport à des valeurs prédéfinies, au moins un signal d'avertissement peut être émis au moyen d'un générateur de signaux, notamment un contact de relais.

12. Entraînement tubulaire (1) selon l'une quelconque des revendications 3 à 11, lorsqu'elles dépendent de la revendication 3, **caractérisé en ce que** le tablier (2) peut être amené dans une position intermédiaire entre les positions finale, détectée au moyen de l'appareil de détection de position (11) et mémorisée dans l'unité de commande et de régulation (12), et peut être maintenu dans cette position, notamment pour une durée de séjour définie, notamment **en ce que**, lorsque cette position intermédiaire est atteinte, au moins un signal de confirmation peut être émis au moyen d'un générateur de signaux, notamment d'un contact de relais.

13. Entraînement tubulaire (1) selon l'une quelconque des revendications précédentes, **caractérisé en ce que** l'appareil de détection de position (11) est logé dans un tube de boîtier (13) de l'entraînement tubulaire de protection contre l'incendie (1).

14. Entraînement tubulaire (1) selon l'une quelconque des revendications 3 à 13 précédentes, lorsqu'elles dépendent de la revendication 3, **caractérisé en ce que** l'appareil de détection de position (11) présente un arbre de commutation (14) qui est relié fonctionnellement à un arbre d'entraînement du moteur d'entraînement (6), un agencement de capteur (15) pour la détection de position de l'arbre de commutation (14) étant relié électroniquement à l'unité de commande et de régulation (12), l'unité de commande et de régulation (12) étant reliée électroniquement au moteur d'entraînement (6) de l'entraînement tubulaire (1).

15. Entraînement tubulaire (1) selon la revendication 14, **caractérisé en ce que** l'agencement de capteur (15) présente une roue dentée de commutation (16) en liaison active avec l'arbre de commutation (14), qui s'engrène avec au moins deux roues dentées de capteur (17, 18), les au moins deux roues dentées de capteur (17, 18) présentant un nombre de dents différent et un capteur (19), de préférence sans contact, étant associé à chaque roue dentée de capteur (17, 18).

16. Entraînement tubulaire (1) selon la revendication 15, **caractérisé en ce que** le capteur sans contact (19) est réalisé sous forme de capteur à effet Hall qui coopère avec un aimant permanent (20, 21) relié de manière fixe à la roue dentée de capteur (17, 18) respective.

17. Entraînement tubulaire (1) selon l'une quelconque des revendications précédentes 13 à 16, **caractérisé en ce qu'**il est prévu entre l'arbre de commutation (14) et l'arbre d'enroulement (24) une transmission, de préférence avec une bague de roulement (26) avec une denture intérieure, qui engrène avec une denture extérieure prévue sur l'arbre de commutation (14).

18. Entraînement tubulaire (1) selon l'une quelconque des revendications précédentes, lorsqu'elles dépendent de la revendication 3, **caractérisé en ce que** le régulateur de vitesse de fermeture (7) relié à l'unité de commande et de régulation (12) peut être commandé et surveillé au moyen de l'appareil de détection de position (11) pour une limitation de vitesse de rotation du moteur d'entraînement (6) et/ou de l'arbre d'enroulement (24).

19. Entraînement tubulaire (1) selon l'une quelconque des revendications 3 à 18 précédentes, lorsqu'elles dépendent de la revendication 3, **caractérisé en ce que** l'unité de commande et de régulation (12) présente une coupure de sécurité, au moins une position finale de sécurité supplémentaire étant enregistrée dans l'unité de commande (12) lors de l'apprentissage des positions finale.

20. Installation de protection contre l'incendie (32) avec un entraînement tubulaire (1) selon l'une quelconque des revendications précédentes.

21. Installation de protection contre l'incendie (32) selon la revendication 20, **caractérisée en ce qu'**elle présente une unité de commande et de régulation (12) au moyen de laquelle un moteur d'entraînement (6) et/ou un frein de courant de travail (5) et/ou un régulateur de vitesse de fermeture (7) peut ou peuvent être commandé(s) et/ou régulé(s) en fonction d'un signal émis par un appareil de détection de position (11).

22. Utilisation d'un appareil électronique de détection de position (11) dans un entraînement tubulaire (1) selon l'une quelconque des revendications 1 à 19 précédentes pour la reconnaissance ou la surveillance de la position absolue d'un tablier (2) pouvant être enroulé sur un arbre d'enroulement (24) et pour la détermination de la vitesse de rotation de l'arbre d'enroulement (24), même dans un cas de danger dans lequel le frein de courant de travail (5) et le moteur d'entraînement (6) de l'entraînement tubulaire (1) sont dans un état hors tension, et immédiatement après un cas de catastrophe dans lequel l'entraînement tubulaire (1) est dans un état hors tension.
